# EUROPÄISCHE PATENTANMELDUNG

(11) **EP 4 513 231 A1**
(43) Veröffentlichungstag der Anmeldung: **26.02.2025**
(21) Anmeldenummer: 24187472.6
(22) Anmeldetag: 09.07.2024
(51) Int. Cl.: G01S 7/481, G01S 7/487, G01S 17/04, G01S 17/08, G01S 17/48

(54) **TRIANGULATIONS-LICHTTASTER**

(30) Priorität: 25.08.2023 DE 102023122837
(71) Anmelder: SICK AG, 79183 Waldkirch (DE)
(72) Erfinder: KÖHL, Martin, 79183 Waldkirch (DE)
(74) Vertreter: Manitz Finsterwald Patent- und Rechtsanwaltspartnerschaft mbB

(57) **Zusammenfassung**

Triangulations-Lichttaster umfassend einen Lichtsender zum Aussenden von Sendelichtstrahlen in den Überwachungsbereich und einen ortsauflösenden Lichtempfänger zum Empfangen von Empfangslichtstrahlen, wobei der Lichtempfänger mehrere Empfangsbereiche umfasst, die jeweilige Empfangssignale ausgeben, wobei die Empfangsbereiche einen Nahbereich und einen Fernbereich umfassen, wobei die Empfangsbereiche unterschiedlichen Objektabständen zugeordnet sind, wobei der Triangulations-Lichttaster eine Auswertungseinrichtung umfasst, die ausgebildet ist, in Abhängigkeit von den Empfangssignalen die Anwesenheit eines Objekts anzuzeigen, wobei die Auswertungseinrichtung ausgebildet ist, basierend auf einer ersten Bedingung, welche das Empfangssignal des Nahbereichs und das Empfangssignal des Fernbereichs auswertet, von einem Zustand, in welchem kein Objekt angezeigt wird in einen Zustand, in welchem ein Objekt angezeigt wird, zu wechseln, wobei die Auswerteeinrichtung ferner ausgebildet ist, basierend auf einer zweiten Bedingung, welche das Empfangssignal des Nahbereichs und das Empfangssignal des Fernbereichs auswertet, von einem Zustand, in welchem ein Objekt angezeigt wird in einen Zustand, in welchem kein Objekt angezeigt wird, zu wechseln.

## Beschreibung

Die Erfindung betrifft einen Triangulations-Lichttaster zum Erfassen eines in einem Überwachungsbereich befindlichen oder in diesen hineinragenden Objekts.

Triangulations-Lichttaster werden auf verschiedenen Gebieten der Technik dazu verwendet, Objekte an bestimmten Positionen zu erfassen und gegebenenfalls die Entfernung eines Objekts vom Sensor zu bestimmen.

Ein Vorteil von solchen Triangulations-Lichttastern gegenüber einfachen schaltenden Näherungssensoren besteht darin, dass der gewünschte Erfassungsabstand einstellbar ist.

Der Triangulations-Lichttaster kann eine Auswerteeinheit umfassen, die ein Schaltsignal erzeugt, wenn sich das Objekt in einem vorgegebenen Schaltabstand befindet, wobei der Schaltabstand einstellbar ist. Ein solcher Triangulations-Lichttaster kann in einer Vielzahl unterschiedlicher Anwendungssituationen mit verschiedenen Tastweiten verwendet werden.

Da der Lichtempfänger eines Triangulations-Lichttasters üblicherweise einen relativ großen Empfangssichtwinkel aufweist, besteht eine relativ hohe Wahrscheinlichkeit, Störsignale zu empfangen, insbesondere auch von spiegelnden zu erfassenden Objekten.

Es ist daher eine Aufgabe der vorliegenden Erfindung, einen verbesserten Triangulations-Lichttaster bereitzustellen. Insbesondere ist es eine Aufgabe der vorliegenden Erfindung, einen Triangulations-Lichttaster anzugeben, der unempfindlicher gegen Störsignale, insbesondere sogenannte Umspiegelungen, ist.

Diese Aufgabe wird gelöst durch den Gegenstand der unabhängigen Ansprüche. Weiterbildungen sind in den abhängigen Ansprüchen angegeben.

Gemäß einem ersten Aspekt wird ein Triangulations-Lichttaster angegeben. Der Triangulations-Lichttaster dient zum Erfassen eines in einem Überwachungsbereich befindlichen oder in diesen hineinragenden Objekts und umfasst einen Lichtsender zum Aussenden von Sendelichtstrahlen in den Überwachungsbereich und einen ortsauflösenden Lichtempfänger zum Empfangen von Empfangslichtstrahlen.

Dabei umfasst der Lichtempfänger mehrere Empfangsbereiche, die jeweilige Empfangssignale ausgeben, wobei die Empfangsbereiche zumindest einen Nahbereich und einen Fernbereich umfassen, wobei die Empfangsbereiche unterschiedlichen Objektabständen zugeordnet sind und zu diesem Zweck derart angeordnet sind, dass je nach Abstand des zu erfassenden Objekts vom Triangulations-Lichttaster unterschiedliche Empfangsbereiche von remittiertem Empfangslicht beaufschlagt werden.

Der Triangulations-Lichttaster umfasst auch eine Auswertungseinrichtung, die ausgebildet ist, in Abhängigkeit von den Empfangssignalen die Anwesenheit eines Objekts anzuzeigen,

Dabei ist die Auswertungseinrichtung ausgebildet, basierend auf einer ersten Bedingung, welche das Empfangssignal des Nahbereichs und optional bzw. bevorzugt (gleichzeitig) das Empfangssignal des Fernbereichs auswertet, von einem Zustand, in welchem kein Objekt angezeigt wird, in einen Zustand, in welchem ein Objekt angezeigt wird, zu wechseln. Das Anzeigen des Objekts kann z.B. durch Ausgeben eines Schaltsignals erfolgen.

Die Auswerteeinrichtung ist weiter ausgebildet, basierend auf einer zweiten Bedingung, welche das Empfangssignal des Nahbereichs und (gleichzeitig) das Empfangssignal des Fernbereichs auswertet, von einem Zustand, in welchem ein Objekt angezeigt wird, in einen Zustand, in welchem kein Objekt angezeigt wird, zu wechseln.

Die erste Bedingung und die zweite Bedingung sind dabei voneinander verschieden.

Es wird somit ein Triangulations-Lichttaster angegeben, bei dem die Übergangsbedingungen zwischen einem An-Zustand, in dem ein Objekt angezeigt wird, und einem Aus-Zustand, in dem kein Objekt angezeigt wird, und andersherum, voneinander verschieden sind. Mit anderen Worten sind die Übergangsbedingungen asymmetrisch.

Diese asymmetrischen Übergangsbedingungen dienen insbesondere dazu, Störsignale, die durch sogenannte Umspiegelungen auftreten, zu erkennen und das Auftreten solcher Umspiegelungen derart zu berücksichtigen, dass unabhängig davon das korrekte Messignal ausgewertet werden kann.

Der Triangulations-Lichttaster ist dazu beispielweise auf einen Überwachungsbereich gerichtet, in den von dem Lichtsender, wie beispielsweise einem Laser, ein Sendelichtstrahl gerichtet wird. In diesen Überwachungsbereich kann dann ein zu erkennendes Objekt auf einem Hintergrund, wie einer Oberfläche eines Förderbands, hineinbewegt werden, beispielsweise durch Vorschub des Objekts und/oder des Triangulations-Lichttaster entlang einer oder mehrerer Bewegungsrichtungen.

Sobald ein Objekt, wie beispielsweise ein Werkstück oder ein Produktionsgegenstand, in den Überwachungsbereich bewegt wird und von dem Lichtsender bestrahlt wird, reflektiert bzw. remittiert dieses den Sendelichtstrahl, woraufhin der remittierte Sendelichtstrahl über eine Empfangsoptik auf den Lichtempfänger gelangt.

Dabei weist der Lichtempfänger mehrere Empfangsbereiche auf, insbesondere zumindest einen Bereich, der einer Remission aus einem Nahbereich entspricht, und einen Bereich, der einer Remission aus einem Fernbereich entspricht, und innerhalb derer der bzw. die Empfangslichtstrahlen empfangen werden und so auf eine Position und insbesondere ein Abstand des Objekts geschlossen werden kann. Insbesondere kann durch die genaue Position der Empfangslichtstrahlen in den Empfangsbereichen der (exakte) Abstand des Objekts ermittelt werden.

Der Lichtempfänger kann eine kontinuierliche Lichtempfangsfläche aufweisen, auf welcher gleich große oder unterschiedlich große Lichtempfangsbereiche definiert sind. Bevorzugt ist es jedoch, dass die Empfangsbereiche durch separate Empfangselemente gebildet sind. Beispielsweise kann es sich bei den separaten Empfangselementen um Fotodioden handeln. Bevorzugt sind die Empfangselemente zumindest zum Teil hintereinander entlang einer geraden Linie angeordnet.

Der Lichtempfänger kann in dem Triangulationstaster versetzt zu dem Lichtsender angeordnet sein, sodass sich ein Winkel zwischen dem Sendelicht und dem auf den Lichtempfänger auftreffenden Empfangslicht ergibt. Der Lichtempfänger und insbesondere die Lichtempfangsfläche können in einer Richtung, welche vollständig oder zumindest anteilsweise senkrecht zur Richtung des Sendelichts verläuft, angeordnet sein.

Die Auswerteeinrichtung des Triangulations-Lichttasters kann dazu ausgebildet sein, für die verschiedenen Empfangsbereiche in Abhängigkeit von den zugehörigen Objektabstände unterschiedliche interne Signale zu erzeugen.

Es werden erfindungsgemäß sowohl der Nahbereich als auch der Fernbereich des Triangulations-Lichttasters gleichzeitig ausgewertet, um zu entscheiden, ob sich ein Objekt im Überwachungsbereich befindet.

Herkömmlicherweise wird bei Erfassung einer Remission im Nahbereich auf das Vorhandensein eines Objekts geschlossen und bei Erfassung im Fernbereich auf das Nichtvorhandensein eines Objekts, ohne dass dabei der jeweils andere Bereich ausgewertet wird.

Jedoch können Umspiegelungen, die insbesondere durch hochreflektive Oberflächen eines Objekts auftreten können, und die als Störsignal bezeichnet werden können, zusätzlich zu einem Messignal, welches das eigentlich auszuwertende Signal ist, das typischerweise ohne Zwischenreflektion, direkt auf den Empfangsbereich remittiert wird, herkömmlicherweise von dem Empfangsbereich detektiert werden und können somit eine Falschauslösung des Triangulations-Lichttasters bewirken.

Um diese Umspiegelungen korrekt zu erkennen, werden erfindungsgemäß sowohl Nahbereich als auch Fernbereich ausgewertet und dabei basierend auf asymmetrischen Bedingungen entschieden, ob und inwieweit es sich bei dem empfangenen Signal um ein Messignal oder ein Störsignal handelt, wie dies noch erläutert wird.

Durch die erfindungsgemäße Vorrichtung ist es möglich, Störsignale, die insbesondere aus Umspiegelungen resultieren, besonders zuverlässig zu erkennen und sowohl Fehleinschaltungen als auch Fehlausschaltungen des Triangulations-Lichttasters zu vermeiden oder auszuschließen.

Gemäß einer Weiterbildung umfasst der Fernbereich ferner einen Hintergrundbereich, wobei die erste Bedingung und die zweite Bedingung zusätzlich das Empfangssignal des Hintergrundbereichs auswertet. Es wird also gemäß dieser Weiterbildung ein dritter Bereich zusätzlich ausgewertet. Dieser Hintergrundbereich liegt dabei an demjenigen Ende des Fernbereichs, das an den Nahbereich angrenzt. Für die Auswertung des Hintergrundbereichs kann es notwendig sein, dass in dem Hintergrundbereich auch tatsächlich ein Hintergrund, z.B. ein Förderband oder eine andere Auflagefläche für das zu erfassende Objekt, vorhanden ist. Der Sendelichtstrahl kann auf den Hintergrund auftreffen, sofern kein Objekt im Überwachungsbereich vorhanden ist. Die Remission des Sendelichtstrahls vom Hintergrund kann (ohne Objekt) in dem Hintergrundbereich des Lichtempfängers auftreffen.

Alternativ kann der Hintergrundbereich als eigenständiger Bereich bezeichnet werden, der zwischen dem Nahbereich und dem Fernbereich angeordnet ist.

Durch diese Weiterbildung wird es ermöglicht, die Signale bzw. den Empfangslichtstrahl noch genauer zu unterscheiden und basierend darauf zwischen einem Zustand, in welchem ein Objekt angezeigt wird, und einem Zustand, in welchem kein Objekt angezeigt wird, zu unterscheiden. Insbesondere wird es durch die Vorsehung von insgesamt drei Bereichen noch besser möglich, asymmetrische Bedingungen zugrunde zu legen.

Diese Bedingungen, insbesondere die erste Bedingung, gemäß der von einem ersten Zustand, in welchem kein Objekt angezeigt wird, in einen zweiten Zustand, in welchem ein Objekt angezeigt wird, umgeschaltet wird und die zweite Bedingung, gemäß der von dem zweiten Zustand, in welchem ein Objekt angezeigt wird, in den ersten Zustand, in welchem kein Objekt angezeigt wird, zurückgeschaltet wird, werden nun im weiteren Verlauf im Detail beschrieben.

Gemäß einer Weiterbildung umfasst die erste Bedingung, dass ein Empfangssignal im Nahbereich erkannt wurde. Gemäß dieser Weiterbildung wird somit ein Signal im Nahbereich erfasst, wodurch auf die Präsenz eines Objekts im Nahbereich geschlossen werden kann. Insbesondere wird durch diese Bedingung ein Signal erfasst, das räumlich vor dem Hintergrundbereich und somit näher an dem Triangulations-Lichttaster angeordnet ist als der Hintergrund selbst, welches nur durch ein Objekt im Überwachungsbereich erzeugt sein kann.

Gemäß einer Weiterbildung umfasst die erste Bedingung, dass kein Empfangssignal im Fernbereich erkannt wurde. Gemäß dieser Weiterbildung wird somit kein Signal im Fernbereich, also insbesondere in keinem Teil des Fernbereichs, auch nicht im Hintergrundbereich, erfasst. Wenn ein Hintergrund vorhanden ist, müsste - wenn kein Objekt vorhanden ist - zumindest das remittierte Empfangslicht im Hintergrundbereich vorhanden sein. Wenn dieses Signal nicht vorhanden ist, muss aber ein Objekt vorhanden sein, dass das Rückremittieren des Sendelichts verhindert, wodurch ebenfalls auf die Präsenz eines Objekts im Nahbereich geschlossen werden kann.

Insbesondere wird durch diese Bedingung kein Signal erfasst, das räumlich hinter dem Hintergrundbereich und somit weiter weg von dem Triangulations-Lichttaster angeordnet ist als der Hintergrund selbst, wodurch sichergestellt ist, dass z.B. keine Umspiegelung oder ein sonstiges Störlicht gerade vorliegt.

Gemäß einer Weiterbildung wird dadurch ermittelt, dass kein Empfangssignal im Fernbereich erkannt wurde, dass ein Median des Empfangssignals im Nahbereich liegt. Durch die Verwendung des Medians kann insbesondere auch ein Teil des Empfangssignals (wie in der Praxis manchmal der Fall) im Hintergrund- oder Fernbereich erfasst werden, der überwiegende Teil, also z.B. mehr als die Hälfte des Empfangssignals, wird dabei jedoch im Nahbereich erfasst. Durch den Median ergibt sich dann genau ein Ergebnispunkt auf dem Lichtempfänger, wobei die Lage des Ergebnispunkts als Lage des Empfangssignals verwendet wird. Wenn also der Ergebnispunkt im Nahbereich liegt, wird angenommen, dass kein Empfangssignal im Fernbereich erkannt wurde. Dementsprechend wird davon ausgegangen, dass sich ein Objekt im Nahbereich befindet.

Alternativ oder zusätzlich wird gemäß einer Weiterbildung dadurch ermittelt, dass kein Empfangssignal im Fernbereich erkannt wurde, dass eine Signalenergie des Empfangssignals unterhalb eines vorgegebenen Schwellwerts liegt. Der Schwellwert kann dabei vorbestimmt sein und entweder statisch oder dynamisch sein. Beispielsweise kann der Schwellwert ein absoluter oder relativer Wert sein, der überschritten werden muss, um ein Signal im Fernbereich zu erkennen und somit im Umkehrschluss unter dem Schwellwert liegen muss, um kein Signal im Fernbereich zu erkennen.

Insbesondere kann der Schwellwert auch dynamisch anhand der Lichtverhältnisse, die um den Triangulations-Lichttaster herrschen, angepasst werden.

Bei der Signalenergie handelt es sich insbesondere um die empfangene Gesamtsignalenergie.

Gemäß einer Weiterbildung umfasst die erste Bedingung, dass kein Empfangssignal im Hintergrundbereich erkannt wurde. Gemäß dieser Weiterbildung wird somit kein Signal im Hintergrundbereich erfasst, wobei dann z.B. davon ausgegangen wird, dass der Hintergrund von einem Objekt im Überwachungsbereich verdeckt ist. Somit kann wiederum auf die Präsenz eines Objekts im Nahbereich geschlossen werden kann.

Insbesondere wird durch diese Bedingung kein Signal erfasst, das räumlich in dem Hintergrundbereich liegt. Somit wird kein Signal erfasst, das zwischen dem Nahbereich und dem Fernbereich liegt (aber ggf. ein Signal im Nahbereich), wodurch auch auf die Präsenz eines Objekts geschlossen werden kann.

Dabei sind diese zuvor beschriebenen ersten Bedingungen oder-verknüpft. Mit anderen Worten: Wenn zumindest eine dieser ersten Bedingungen eintritt bzw. erfasst wird, wird erfindungsgemäß von dem ersten Zustand, in welchem kein Objekt angezeigt wird, in den zweiten Zustand, in welchem ein Objekt angezeigt wird, gewechselt.

Es können selbstverständlich auch mehrere oder alle ersten Bedingungen erfüllt sein, damit von dem ersten Zustand in den zweiten Zustand gewechselt wird.

Durch diese Weiterbildungen wird es ermöglicht, besonders genau und präzise zu differenzieren, wann von einem Zustand, in welchem kein Objekt angezeigt wird, in einen Zustand, in welchem ein Objekt angezeigt wird, gewechselt wird.

Gemäß einer Weiterbildung umfasst die zweite Bedingung, dass ein Empfangssignal im Hintergrundbereich erkannt wurde und dass das Empfangssignal einer vorgegebenen Signalform entspricht. Es kann also dann von dem Zustand, in welchem ein Objekt angezeigt wird, in den Zustand, in welchem kein Objekt angezeigt wird, gewechselt werden, wenn ein Empfangssignal im Hintergrundbereich erkannt wurde und dass das Empfangssignal einer vorgegebenen Signalform entspricht.

Es sind somit gemäß dieser Ausführungsform zwei Bedingungen notwendig, die gemeinsam eintreten müssen, damit in den ersten Zustand, in welchem kein Objekt angezeigt wird, gewechselt wird. Insbesondere wird nur dann von dem zweiten Zustand in den ersten Zustand gewechselt, wenn beide dieser zweiten Bedingungen gleichzeitig eintreten und erfasst werden. Anderenfalls verbleibt der Triangulations-Lichttaster im zweiten Zustand.

Dies unterscheidet sich insofern von den zuvor beschriebenen ersten Bedingungen, die jeweils allein eintreten können, damit in den zweiten Zustand, in welchem ein Objekt angezeigt wird, gewechselt wird.

Darüber hinaus unterscheidet sich diese zweite Bedingung auch insoweit von den ersten Bedingungen, als dass eine Signalform berücksichtigt wird. Dabei kann die Signalform als Ganzes und/oder gewisse Eigenschaften wie beispielsweise deren Breite, Schiefe, Steilheit etc. alleine oder in Kombination Berücksichtigung finden.

Gemäß einer Weiterbildung wird dadurch ermittelt, dass ein Empfangssignal im Hintergrundbereich erkannt wurde, dass ein Median des Empfangssignals im Hintergrundbereich liegt. Dabei kann auch hier ein Teil des Empfangssignals im Nah- oder Fernbereich erfasst werden, wobei der überwiegende Teil, also z.B. mehr als die Hälfte des Empfangssignals, jedoch im Hintergrundbereich erfasst wird. Durch den hohen Signalanteil im Hintergrundbereich, wird davon ausgegangen, dass der Sendelichtstrahl tatsächlich auf den Hintergrund aufgetroffen ist, wobei vom Hintergrund also zumindest ein gewisser Anteil der Strahlung in den Hintergrundbereich remittiert wurde, was für die Abwesenheit eines Objekts vor dem Hintergrund spricht.

Zusätzlich kann dadurch ermittelt werden, dass ein Empfangssignal im Hintergrundbereich erkannt wurde, dass eine Signalenergie des Empfangssignals oberhalb eines vorgegebenen Schwellwerts liegt. Der Schwellwert kann dabei ebenso wie zuvor beschrieben vorbestimmt sein und entweder statisch oder dynamisch sein.

Alternativ oder zusätzlich zu den Weiterbildungen gemäß den oben geschilderten Ausgestaltungen unter Berücksichtigung des Medians kann auch ein Schwerpunkt des jeweiligen Signals betrachtet werden.

Gemäß einer Weiterbildung umfasst die vorgegebenen Signalform, dass ein einzelnes zusammenhängendes Empfangssignal empfangen wird. Ein einzelnes, zusammenhängendes Empfangssignal meint dabei insbesondere ein Signal, das nicht zwei oder mehrere voneinander isolierte Peaks oder Ausschläge umfasst, sondern lediglich einen Peak oder Ausschlag, der gegebenenfalls Nebenrauschen umfassen kann. Ein Peak oder Ausschlag kann z.B. dann vorliegen, wenn die Signalstärke des Empfangssignals in einem Bereich um 30%, 50% oder 70% höher ist, als der Durchschnitt der Signalstärke des Empfangssignals.

Insbesondere kann hierzu aus der Intensitätsverteilung eine Kennzahl gebildet werden, die darauf hinweist, dass es sich um ein zusammenhängendes Empfangssignal handelt, unabhängig von der Signalstärke.

Insbesondere wird durch diese Weiterbildung eine Umspiegelung, die im Nahbereich detektiert wird und die möglicherweise eine größere Signalenergie hat und damit auch einen größeren Ausschlag erzeugt, ignoriert, wenn diese nicht mit dem Empfangssignal im Hintergrundbereich zusammenhängt.

Durch diese Weiterbildungen wird es ermöglicht, besonders genau und präzise zu differenzieren, wann von einem Zustand, in welchem ein Objekt angezeigt wird, in einen Zustand, in welchem kein Objekt angezeigt wird, gewechselt wird.

Ausführungsformen des Triangulationstasters werden nun im Zusammenhang mit den folgenden Figuren näher erläutert. Es zeigen:
- Fig. 1: eine schematische Seitenschnittansicht einer Ausführungsform eines Triangulations-Lichttasters;
- Fig. 2: eine schematische Seitenschnittansicht einer Ausführungsform eines Triangulations-Lichttasters aus Fig .1 im Betrieb;
- Fig. 3: eine weitere schematische Seitenschnittansicht einer Ausführungsform eines Triangulations-Lichttasters aus Fig .1 im Betrieb;
- Fig. 4: eine weitere schematische Seitenschnittansicht einer Ausführungsform eines Triangulations-Lichttasters aus Fig .1 im Betrieb;
- Fig. 5: eine weitere schematische Seitenschnittansicht einer Ausführungsform eines Triangulations-Lichttasters aus Fig .1 im Betrieb; und
- Fig. 6: ein schematisches Ablaufdiagramm, mithilfe dessen eine Ausführungsform eines Triangulations-Lichttasters aus Fig. 1 betrieben werden kann.

Dabei bezeichnen gleiche Bezugszeichen gleiche oder ähnliche Merkmale.

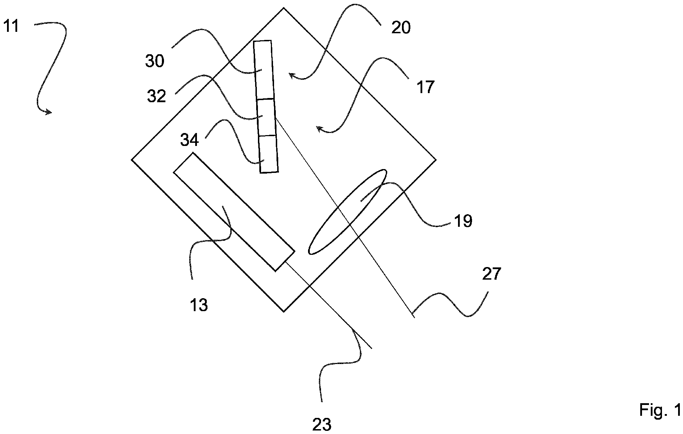

Fig. 1 zeigt eine schematische Seitenschnittansicht einer Ausführungsform eines Triangulations-Lichttasters 11.

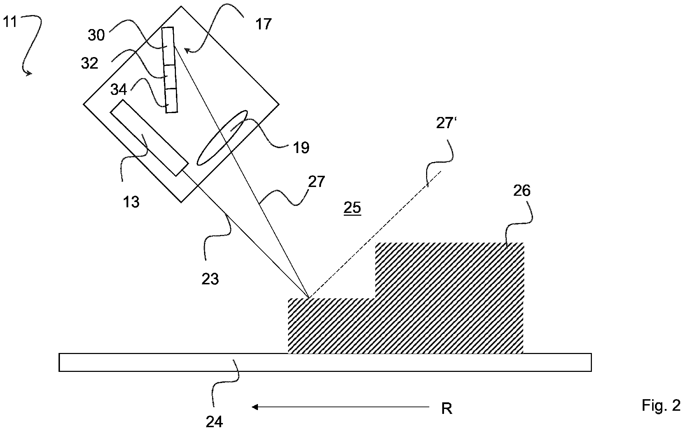

Der Triangulations-Lichttaster 11 dient dabei insbesondere dazu, ein in einem Überwachungsbereich befindlichen oder in diesen hineinragendes Objekt zu erfassen. Das Objekt bzw. der Überwachungsbereich ist in dieser Fig. 1 aus Gründen der Übersichtlichkeit nicht abgebildet und wird im Detail im Zusammenhang mit den Fig. 2 bis Fig. 5 erläutert, in denen verschiedene Betriebszustände des Triangulations-Lichttasters 11 beschrieben sind.

Der Triangulations-Lichttaster 11 umfasst einen Lichtsender 13, wie beispielsweise eine Laserdiode. Dem Lichtsender 13 kann eine Sendeoptik zugeordnet sein, die jedoch aus Gründen der Übersichtlichkeit nicht abgebildet ist.

Weiterhin umfasst der Triangulations-Lichttaster 11 einen Lichtempfänger 17 sowie eine diesem zugeordnete Empfangsoptik 19. Der Lichtempfänger 17 weist ortsauflösende Eigenschaften auf, was beispielsweise durch mehrere Fotodioden erreicht werden kann. Eine ebenfalls nicht gezeigte elektronische Steuereinrichtung kann vorgesehen sein, die mit dem Lichtsender 13 und dem Lichtempfänger 17 in Signalverbindung steht und den Betrieb des Triangulations-Lichttasters 11 steuert.

Während des Betriebs des Triangulations-Lichttasters 11 sendet der Lichtsender 13 Sendelichtstrahlen 23 in einen Überwachungsbereich, in welchem sich ein zu erfassendes Objekt befindet. Von dem Objekt remittierte Lichtstrahlen gelangen als Empfangslichtstrahlen 27 auf den Lichtempfänger 17. Je nachdem, aus welchem Abstand und demnach in welchem Winkel die Empfangslichtstrahlen 27 remittiert werden, werden unterschiedliche Empfangsbereiche 20 von den Empfangslichtstrahlen 27 erreicht bzw. beaufschlagt.

Der von der Empfangsoptik 19 erzeugte Lichtfleck der Empfangslichtstrahlen 27 trifft in einem der hier beispielhaft gezeigten drei Empfangsbereiche 20 auf, je nachdem wovon, wie und/oder in welchem Winkel der Sendelichtstrahl 23 remittiert wird. Die Empfangslichtstrahlen 27, die zum Messen bzw. Erkennen eines Objekts dienen, können auch als Messsignal 27 bezeichnet werden.

Dabei ist ein erster Empfangsbereich vorgesehen, der auch als Nahbereich 30 bezeichnet werden kann und in dem insbesondere solche Empfangslichtstrahlen 27 auftreffen, die aus einem nahen Abstand remittiert werden, ein zweiter Empfangsbereich, der auch als Hintergrundbereich 32 bezeichnet werden kann und in dem insbesondere solche Empfangslichtstrahlen 27 auftreffen, die von einem Hintergrund remittiert werden, sowie ein dritter Empfangsbereich, der auch als Fernbereich 34 bezeichnet werden kann und in dem insbesondere solche Empfangslichtstrahlen 27 auftreffen, die aus einem fernen bzw. weiten Abstand remittiert werden, wie dies ebenfalls noch im Zusammenhang mit den folgenden Fig. 2 bis Fig. 5 erläutert werden wird. Allgemein ist der Hintergrundbereich 32 ein spezieller Teilbereich des Fernbereichs 34.

Anhand von Detektionen von Empfangslichtstrahlen 27 in den verschiedenen Empfangsbereichen 20 wird unter Berücksichtigung verschiedener erster Bedingungen darauf geschlossen, dass sich ein Objekt im Überwachungsbereich befindet und aufgrund davon verschiedener zweiter Bedingungen, dass sich kein Objekt im Überwachungsbereich befindet.

Die im Folgenden im Zusammenhang mit den Fig. 2 bis Fig. 5 beschriebenen Fälle sind beispielhafte Situationen, in denen Störsignale wie beispielsweise Umspiegelungen auftreten können, welche durch die erfindungsgemäße Vorrichtung als solche erkannt und die Präsenz eines Objekts dennoch korrekt ermittelt werden kann. Es versteht sich, dass diverse andere Szenarien denkbar sind, in denen die erfindungsgemäße Vorrichtung ebenfalls korrekt das Vorhandensein eines Objekts trotz Störsignalen erkennen kann.

Fig. 2 zeigt eine schematische Seitenschnittansicht einer Ausführungsform eines Triangulations-Lichttasters aus Fig .1 im Betrieb in einem beispielhaften Zustand.

Wie in dieser Fig. 2 beispielhaft gezeigt, wird hier der Sendelichtstrahl 23 von einer Oberfläche eines Objekts 26, das sich auf einem Hintergrund 24 befindet und in Richtung R relativ zu dem Triangulations-Lichttaster 11 bewegt wird, remittiert.

Das Objekt 26 weist dabei eine Stufe oder Kante in Bewegungsrichtung R auf, was zu Störsignaleinflüssen durch Remission bzw. Umspiegelungen führen kann, welche mit herkömmlichen Triangulationstastern schlecht oder nicht von einem Messignal unterschieden werden können. Diese Umspiegelungen können auch als Störsignal 27' bezeichnet werden.

In dem in dieser Fig. 2 gezeigten Beispiel wird das Messsignal 27 von der Oberfläche des Objekts 26 remittiert und tritt im Nahbereich 30 auf, wodurch das Objekt korrekt erkannt wird, da mehrere erste Bedingungen erfüllt sind, nämlich, dass ein Empfangssignal im Nahbereich 30 erkannt wurde, dass kein Empfangssignal im Fernbereich 34 erkannt wurde und dass kein Empfangssignal im Hintergrundbereich 32 erkannt wurde, wodurch der Triangulations-Lichttaster 11 in den zweiten Zustand, in dem ein Objekt angezeigt wird, überführt wird.

Das Störsignal 27' wird zwar von einer insbesondere besonders stark reflektierenden Oberfläche remittiert, jedoch (noch) nicht derart, dass genügend Signalenergie von einem der Empfangsbereiche 20 empfangen wird.

Insbesondere wird hier aufgrund einer zu geringen Signalenergie, die möglicherweise von dem Fernbereich 34 empfangen wird, die erste Bedingung erfüllt, dass kein Empfangssignal im Fernbereich 34 erkannt wurde, was dadurch ermittelt wird, dass eine Signalenergie des Empfangssignals unterhalb eines vorgegebenen Schwellwerts liegt, wodurch der Triangulations-Lichttaster 11 in dem zweiten Zustand, in dem ein Objekt angezeigt wird, verbleibt.

Insbesondere wird durch eine Detektion im Fernbereich nicht unmittelbar darauf geschlossen, dass das Objekt 26 nicht (mehr) im Überwachungsbereich 25 zugegen ist und der Triangulations-Lichttaster 11 nicht zurück in einen Zustand überführt, in dem kein Objekt angezeigt wird.

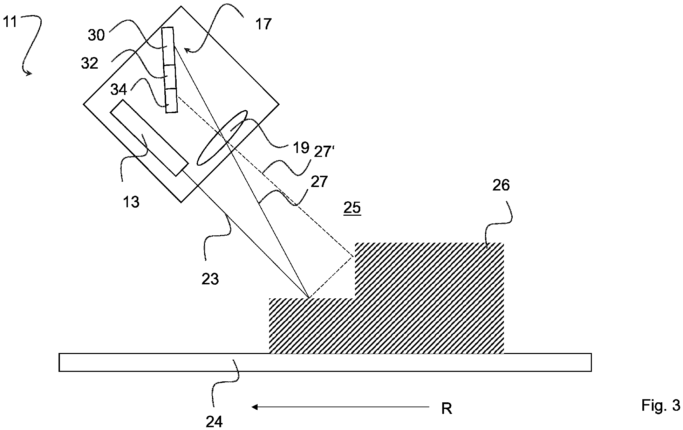

Fig.3 zeigt eine weitere schematische Seitenschnittansicht einer Ausführungsform eines Triangulations-Lichttasters 11 aus Fig .1 im Betrieb in einem weiteren, beispielhaften Zustand.

In diesem Zustand wurde das Objekt 26 auf dem Hintergrund 24 weiter entlang der Richtung R auf den Triangulations-Lichttaster 11 bzw. in den Überwachungsbereich 25 zubewegt. Dadurch tritt, neben der gewünschten direkten Reflexion am Objekt 26 nun auch eine mehrfache Reflexion an der Oberfläche und einer Kante des Objekts auf, die auch von der Empfangsoptik 19 erfasst und auf die Empfangsbereich 20 geleitet wird.

Dadurch trifft das Störsignal 27' im Fernbereich 34 auf. Das Messsignal 27 trifft weiterhin im Nahbereich 30 auf. Dadurch ist weiterhin zumindest die Bedingung, dass ein Empfangssignal im Nahbereich 30 erkannt wurde und dazu noch die Bedingung, dass kein Empfangssignal im Hintergrundbereich 32 erkannt wurde, erfüllt, wodurch der Triangulations-Lichttaster 11 in dem zweiten Zustand, in dem ein Objekt angezeigt wird, verbleibt.

Insbesondere wird allein aufgrund des Auftretens des Messignals im Fernbereich 34 durch die Umspiegelung noch nicht darauf geschlossen, dass das Objekt 26 nicht (mehr) im Überwachungsbereich 25 zugegen ist und der Triangulations-Lichttaster 11 nicht zurück in einen Zustand überführt, in dem kein Objekt angezeigt wird.

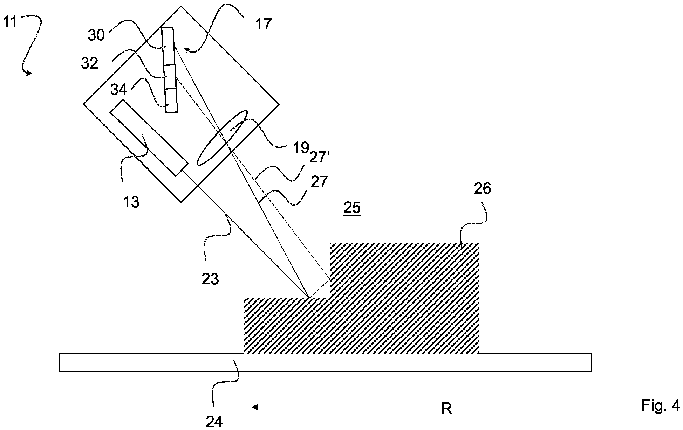

Fig. 4 zeigt eine weitere schematische Seitenschnittansicht einer Ausführungsform eines Triangulations-Lichttasters 11 aus Fig .1 im Betrieb in einem weiteren, beispielhaften Zustand.

In diesem Zustand wurde das Objekt 26 auf dem Hintergrund 24 weiter entlang der Richtung R auf den Triangulations-Lichttaster 11 bzw. in den Überwachungsbereich 25 zubewegt. Dadurch tritt, neben der gewünschten direkten Reflexion am Objekt 26 nun eine von der in Fig. 3 gezeigten verschiedene Umspiegelung auf, die auch von der Empfangsoptik 19 erfasst und auf die Empfangsbereich 20 geleitet wird.

Dadurch trifft das Störsignal 27' in dieser Fig. 4 im Hintergrundbereich 32 auf. Das Messsignal 27 trifft weiterhin im Nahbereich 30 auf. Dadurch ist weiterhin zumindest die Bedingung, dass ein Empfangssignal im Nahbereich 30 erkannt wurde und dazu noch die Bedingung, dass kein Empfangssignal im Fernbereich 34 erkannt wurde, erfüllt, wodurch der Triangulations-Lichttaster 11 in dem zweiten Zustand, in dem ein Objekt angezeigt wird, verbleibt.

Insbesondere wird allein aufgrund des Auftretens des Messignals im Hintergrundbereich 32 durch die Umspiegelung noch nicht darauf geschlossen, dass das Objekt 26 nicht (mehr) im Überwachungsbereich 25 zugegen ist und der Triangulations-Lichttaster 11 nicht zurück in einen Zustand überführt, in dem kein Objekt angezeigt wird.

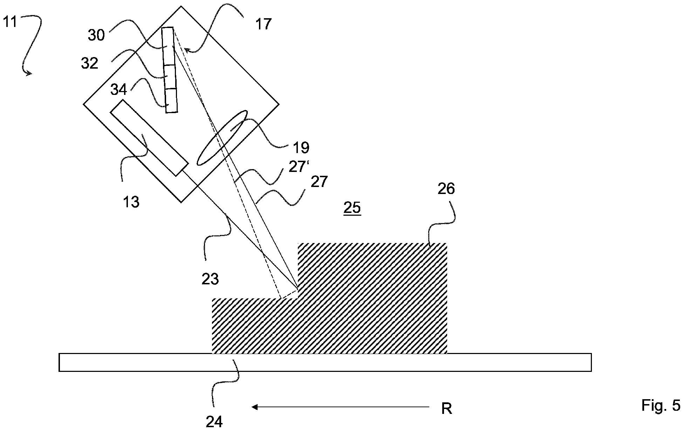

Fig. 5 zeigt eine weitere schematische Seitenschnittansicht einer Ausführungsform eines Triangulations-Lichttasters 11 aus Fig. 1 im Betrieb in einem weiteren, beispielhaften Zustand.

In diesem Zustand wurde das Objekt 26 auf dem Hintergrund 24 weiter entlang der Richtung R auf den Triangulations-Lichttaster 11 bzw. in den Überwachungsbereich 25 zubewegt. Dadurch tritt, neben der gewünschten direkten Reflexion am Objekt 26 nun eine von der in Fig. 3 und Fig. 4 gezeigten verschiedene Umspiegelung auf, die auch von der Empfangsoptik 19 erfasst und auf die Empfangsbereich 20 geleitet wird.

Dadurch trifft das Störsignal 27' in dieser Fig. 5 auch im Nahbereich 32 auf. Das Messsignal 27 trifft ebenso weiterhin im Nahbereich 30 auf. Dadurch ist weiterhin zumindest die Bedingung, dass ein Empfangssignal im Nahbereich 30 erkannt wurde und dazu noch die Bedingungen, dass kein Empfangssignal im Hintergrundbereich 32 und kein Empfangssignal im Fernbereich 34 erkannt wurde, erfüllt, wodurch der Triangulations-Lichttaster 11 in dem zweiten Zustand, in dem ein Objekt angezeigt wird, verbleibt.

Insbesondere wird allein aufgrund des zweifachen Auftretens des Messignals im Nahbereich 30 durch die Umspiegelung noch nicht darauf geschlossen, dass möglicherweise eine Fehlerkennung vorliegt und das Objekt 26 nicht (mehr) im Überwachungsbereich 25 zugegen ist und der Triangulations-Lichttaster 11 nicht zurück in einen Zustand überführt, in dem kein Objekt angezeigt wird.

Bewegt sich das Objekt 26 abschließend (nicht gezeigt) aus dem Überwachungsbereich 25 heraus, so trifft der Sendelichtstrahl 23 auf den Hintergrund 24 auf und wird von dort als Empfangslichtstrahl 27 in den Hintergrundbereich 32 remittiert. Es ist also die Bedingung erfüllt, dass im Hintergrundbereich 32 ein Signal erhalten wird. Zudem ist die Bedingung erfüllt, dass eine vorbestimmte Signalform vorliegt, nämlich eine, die nur aus einem Signalpeak (im Hintergrundbereich 32) besteht. Dadurch sind beide notwendigen Bedingungen erfüllt und der Triangulations-Lichttaster 11 wechselt von dem Zustand in dem ein Objekt angezeigt wird, in den Zustand in dem kein Objekt angezeigt wird.

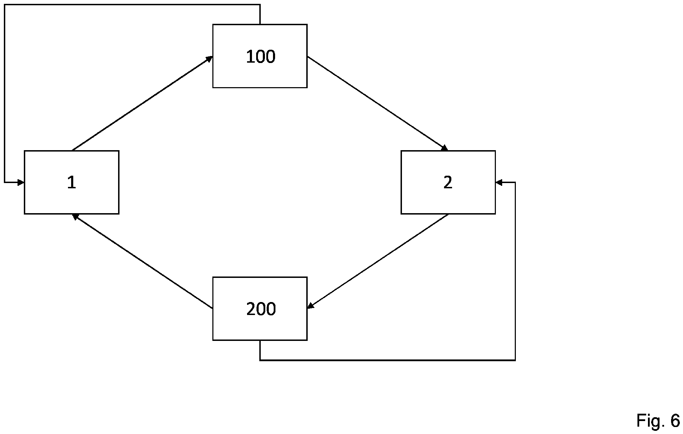

Fig. 6 zeigt ein schematisches Ablaufdiagramm, mithilfe dessen eine Ausführungsform eines Triangulations-Lichttasters 11 aus Fig. 1 betrieben werden kann.

Dabei befindet sich der Triangulations-Lichttaster 11 zunächst beispielhaft in einem ersten Zustand 1, in dem kein Objekt 26 angezeigt bzw. erkannt wird.

Sollte eine von mehreren ersten Bedingungen 100 eintreten, geht der Triangulations-Lichttaster 11 in den zweiten Zustand 2 über, in dem ein Objekt angezeigt bzw. erkannt wird.

Die ersten Bedingungen 100 umfassen dabei, dass ein Empfangssignal im Nahbereich 30 erkannt wurde, dass kein Empfangssignal im (gesamten) Fernbereich 34 (also weder im Fernbereich 34, noch im Hintergrundbereich 32) erkannt wurde oder, dass - spezifischer - kein Empfangssignal im Hintergrundbereich 32 erkannt wurde.

Dass kein Empfangssignal im Fernbereich 34 erkannt wurde, kann dadurch ermittelt werden, dass ein Median des Empfangssignals im Nahbereich 30 liegt oder dadurch, dass eine Signalenergie des Empfangssignals unterhalb eines vorgegebenen Schwellwerts liegt.

Sollte keine von den ersten Bedingungen 100 eintreten, verbleibt der Triangulations-Lichttaster 11 hingegen in dem ersten Zustand 1.

Wenn sich der Triangulations-Lichttaster 11 in dem zweiten Zustand 2 befindet, und eine zweite Bedingung 200 eintritt, kehrt er zurück in den ersten Zustand 1, in dem kein Objekt angezeigt bzw. erkannt wird.

Die zweite Bedingung 200 umfasst dabei, dass ein Empfangssignal im Hintergrundbereich 32 erkannt wurde und dass das Empfangssignal einer vorgegebenen Signalform entspricht.

Dass ein Empfangssignal im Hintergrundbereich 32 erkannt wurde, kann dadurch ermittelt werden, dass ein Median des Empfangssignals im Hintergrundbereich liegt und/oder dadurch, dass eine Signalenergie des Empfangssignals oberhalb eines vorgegebenen Schwellwerts liegt.

Die vorgegebene Signalform umfasst dabei, dass ein einzelnes zusammenhängendes Empfangssignal empfangen wird.

Schließlich kann bei den oben geschilderten Ausgestaltungen alternativ oder zusätzlich zum Median auch ein Schwerpunkt des jeweiligen Signals betrachtet werden.

Sollte keine von den zweiten Bedingungen 200 eintreten, verbleibt der Triangulations-Lichttaster 11 hingegen in dem zweiten Zustand 2.

### Bezuaszeichen

- 1: erster Zustand
- 2: zweiter Zustand
- 11: Triangulations-Lichttaster
- 13: Lichtsender
- 17: Lichtempfänger
- 19: Empfangsoptik
- 20: Empfangsbereich
- 23: Sendelichtstrahl
- 24: Hintergrund
- 25: Überwachungsbereich
- 26: Objekt
- 27: Empfangslichtstrahl, Messignal
- 27': Empfangslichtstrahl, Störsignal
- 30: Nahbereich
- 32: Hintergrundbereich
- 34: Fernbereich
- 100: erste Bedingung
- 200: zweite Bedingung

## Patentansprüche

1. Triangulations-Lichttaster (11) zum Erfassen eines in einem Überwachungsbereich (25) befindlichen oder in diesen hineinragenden Objekts (26),
umfassend einen Lichtsender (13) zum Aussenden von Sendelichtstrahlen (23) in den Überwachungsbereich (25) und einen ortsauflösenden Lichtempfänger (17) zum Empfangen von Empfangslichtstrahlen (27),
wobei der Lichtempfänger (17) mehrere Empfangsbereiche (20) umfasst, die jeweilige Empfangssignale ausgeben, wobei die Empfangsbereiche (20) einen Nahbereich (30) und einen Fernbereich (34) umfassen, wobei die Empfangsbereiche (20) unterschiedlichen Objektabständen zugeordnet sind und zu diesem Zweck derart angeordnet sind, dass je nach Abstand des zu erfassenden Objekts (26) vom Triangulations-Lichttaster (11) unterschiedliche Empfangsbereiche (20) von remittiertem Empfangslicht (27) beaufschlagt werden,
wobei der Triangulations-Lichttaster (11) eine Auswertungseinrichtung umfasst, die ausgebildet ist, in Abhängigkeit von den Empfangssignalen die Anwesenheit eines Objekts (26) anzuzeigen,
**dadurch gekennzeichnet, dass**
die Auswertungseinrichtung ausgebildet ist, basierend auf einer ersten Bedingung (100), welche das Empfangssignal des Nahbereichs (30) und bevorzugt das Empfangssignal des Fernbereichs (34) auswertet, von einem Zustand (1), in welchem kein Objekt angezeigt wird, in einen Zustand (2), in welchem ein Objekt angezeigt wird, zu wechseln,
wobei die Auswerteeinrichtung ferner ausgebildet ist, basierend auf einer zweiten Bedingung (200), welche das Empfangssignal des Nahbereichs (30) und das Empfangssignal des Fernbereichs (34) auswertet, von einem Zustand (2), in welchem ein Objekt angezeigt wird, in einen Zustand (1), in welchem kein Objekt angezeigt wird, zu wechseln,
wobei die erste Bedingung und die zweite Bedingung voneinander verschieden sind.

2. Triangulations-Lichttaster nach Anspruch 1,
wobei der Fernbereich (34) einen Hintergrundbereich (32) umfasst und wobei die erste Bedingung (100) und die zweite Bedingung (200) insbesondere zusätzlich das Empfangssignal des Hintergrundbereichs (32) auswertet.

3. Triangulations-Lichttaster nach Anspruch 1 oder 2,
wobei die erste Bedingung (100) umfasst, dass ein Empfangssignal im Nahbereich (30) erkannt wurde.

4. Triangulations-Lichttaster nach einem der vorhergehenden Ansprüche,
wobei die erste Bedingung (100) umfasst, dass kein Empfangssignal im Fernbereich (34) erkannt wurde.

5. Triangulations-Lichttaster nach Anspruch 4,
wobei dadurch ermittelt wird, dass kein Empfangssignal im Fernbereich (34) erkannt wurde, dass ein Median oder ein Schwerpunkt des Empfangssignals im Nahbereich (30) liegt.

6. Triangulations-Lichttaster nach Anspruch 4 oder 5,
wobei dadurch ermittelt wird, dass kein Empfangssignal im Fernbereich (34) erkannt wurde, dass eine Signalenergie des Empfangssignals unterhalb eines vorgegebenen Schwellwerts liegt.

7. Triangulations-Lichttaster nach einem der Ansprüche 2 bis 6,
wobei die erste Bedingung (100) umfasst, dass kein Empfangssignal im Hintergrundbereich (32) erkannt wurde.

8. Triangulations-Lichttaster nach einem der vorhergehenden Ansprüche 2 bis 7,
wobei die zweite Bedingung (200) umfasst, dass ein Empfangssignal im Hintergrundbereich (32) erkannt wurde und dass das Empfangssignal einer vorgegebenen Signalform entspricht.

9. Triangulations-Lichttaster nach Anspruch 8,
wobei dadurch ermittelt wird, dass ein Empfangssignal im Hintergrundbereich (32) erkannt wurde, dass ein Median oder ein Schwerpunkt des Empfangssignals im Hintergrundbereich (32) liegt.

10. Triangulations-Lichttaster nach Anspruch 8 oder 9,
wobei dadurch ermittelt wird, dass ein Empfangssignal im Hintergrundbereich (32) erkannt wurde, dass eine Signalenergie des Empfangssignals oberhalb eines vorgegebenen Schwellwerts liegt.

11. Triangulations-Lichttaster nach Anspruch 8, 9 oder 10,
wobei die vorgegebenen Signalform umfasst, dass ein einzelnes zusammenhängendes Empfangssignal empfangen wird.
